# EUROPÄISCHE PATENTSCHRIFT

(11) **EP 2 134 571 B1**
(45) Veröffentlichungstag und Bekanntmachung des Hinweises auf die Patenterteilung: **10.02.2016**
(21) Anmeldenummer: 08708867.0
(22) Anmeldetag: 11.02.2008
(51) Int. Cl.: B60R 9/10, B60R 9/06

(54) **LASTENTRÄGER FÜR EIN KRAFTFAHRZEUG**
LOAD CARRIER FOR A MOTOR VEHICLE
PORTE-CHARGE POUR UN VÉHICULE À MOTEUR

(30) Priorität: 12.04.2007 DE 102007017164
(43) Veröffentlichungstag der Anmeldung: 23.12.2009
(73) Patentinhaber: GM Global Technology Operations LLC, Detroit, MI 48265-3000 (US)
(72) Erfinder: LUNGERSHAUSEN, Dirk Rainer, 65207 Wiesbaden (DE); HEIM, Gunther, 68623 Lampertheim (DE)
(74) Vertreter: Spitzfaden, Ralf
(86) Internationale Anmeldenummer: PCT/EP2008/051614
(87) Internationale Veröffentlichungsnummer: WO 2008/125367

(56) Entgegenhaltungen:
- DE-A1- 10 231 963
- DE-A1- 10 252 132
- DE-A1-102004 008 530
- DE-A1-102004 021 709
- DE-A1-102004 022 835
- FR-A- 2 829 082
- US-A- 5 106 002
- US-A- 5 190 195
- US-A- 5 373 978
- US-A- 5 439 151
- US-A- 5 489 110
- US-A- 5 647 719
- US-A- 5 685 686
- US-A- 5 690 260
- US-A1- 2006 028 036
- US-B1- 6 575 509
- US-B1- 7 281 745

## Beschreibung

Die Erfindung betrifft einen ausziehbaren Lastenträger für ein Kraftfahrzeug, insbesondere für einen Pkw, gemäß dem Oberbegriff des Anspruchs 1.

Ein derartiger Lastenträger ist aus der US 5 685 686 A1 bekannt. Aus der DE 10 2004 022835 A1 ist ein Lastenträger zum Ausziehen aus einem Fahrzeugheck bekannt. Der Lastenträger weist einen Tragrahmen auf, welcher durch den Stoßfänger eines Kraftfahrzeuges hindurchgeführt ist. Der Tragrahmen hat eine Schwenkachse, an welcher ein Kennzeichenträger schwenkbar gelagert ist. Der Kennzeichenträger ist von einer Ruhestellung in eine etwa senkrechte Gebrauchsstellung bewegbar. In der Ruhestellung befindet sich der Kennzeichenträger im Wesentlichen in der von dem Tragrahmen aufgespannten Ebene.

Aus der DE 102 31 963 A1 ist ein Lastenträger bekannt, welcher an teleskopierbaren Schienen durch den Stoßfänger geführt ist. Zum Einsatz wird er aus dem Fahrzeugheck herausgezogen.

Die BE 1012537 A6 offenbart einen Lastenträger, der sich auf Rollen gelagert aus dem Fahrzeugheck herausziehen lässt. Der Lastenträger erstreckt sich nahezu über die gesamte Fahrzeugbreite, sodass der gesamte Stoßfänger herausgezogen wird.

Weitere Lastenträger sind aus der FR 2 829 082 A, US 5 690 260 A, US 5 489 110 A, US 5 439 151 A, DE 102 52 132 11, US 5 373 978 A, US 5 190 195 A und DE 10 2004 008 530 A1 bekannt.

Ferner ist aus der DE 10 2004 021 709 A1 ein ausziehbarer Fahrrad-Heckträger für Fahrzeuge bekannt, welcher in Fahrzeuglängsrichtung parallel zueinander verlaufende Träger aufweist. Die Träger sind von einer Ausgangsstellung in eine Betriebsstellung ausziehbar.

Es ist eine Aufgabe einer Ausführungsform der Erfindung, einen Lastenträger der eingangs genannten Art weiterzuentwickeln, mit dem sich bei einem mit einer Heckklappe ausgestatteten Fahrzeug die Heckklappe auch bei beladenem Lastenträger noch öffnen lässt, wobei mit dem Lastenträger bis zu vier Fahrräder befördert werden können.

Die Lösung dieser Aufgabe erfolgt mit den Merkmalen aus dem kennzeichnenden Teil des unabhängigen Anspruchs 1.

Ein erster Aspekt der Erfindung betrifft einen Lastenträger für ein Kraftfahrzeug zum Ausziehen aus dessen Fahrzeugheck. Bei dem Lastenträger ist ein Tragrahmen an mindestens einem mit einer Schwenkachse ausgestattetem und längsverschiebbar ausgebildetem länglichen Element durch den Stoßfänger des Kraftfahrzeugs geführt oder unter dem Stoßfänger des Kraftfahrzeugs geführt ist.

Die genannte Lösung sieht mindestens ein längliches Element vor, das entlang seiner Längsrichtung verschiebbar durch den Stoßfänger geführt ist. Am länglichen Element ist der Tragrahmen befestigt, an dem sich das Transportgut befestigen lässt. Die Handhabung des Lastenträgers ist damit in der ersten Variante wie bei einer Schublade, die durch den Stoßfänger hindurch in das Fahrzeugheck hinein- und herausgeschoben werden kann. In der zweiten Variante, die bei Fahrzeugen mit großem Rampenwinkel anbietet, z.B. bei Geländefahrzeugen, kann das längliche Element schubladenförmig unter dem Stoßfänger geführt sein.

Dadurch, dass das längliche Element nicht nur längsverschiebbar ausgebildet ist, sondern zusätzlich über eine Schwenkachse verfügt, kann eine Heckklappe des Fahrzeugs auch dann noch geöffnet werden, wenn das Transportgut auf dem Lastenträger befestigt ist, sodass das Innere des Kofferraums stets zugänglich bleibt. Die Handhabung des Transportguts über einen kombinierten Kipp-/Schiebemechanismus ermöglicht eine kompaktere Bauweise des Lastenträgers (in Fahrzeuglängsrichtung) im Vergleich zu dem Fall, dass dieser nur längsverschiebbar ist. Dies begrenzt das Gewicht des Lastenträgers und verändert die Fahreigenschaften bei vollständiger Beladung nur wenig.

Der Lastenträger kann eingesetzt werden bzw. ist ausgebildet, zwei und ggf. vier Fahrräder mit Ausrichtung quer zur Fahrzeuglängsrichtung zu transportieren und dennoch im Sinne der vorstehenden Ausführungen die Heckklappe auch bei vollständiger Beladung noch öffnen zu können. Selbstverständlich können auch andere Lasten mit dem Lastenträger transportiert werden. Im Folgenden wird lediglich der leichteren Verständlichkeit wegen stets auf Fahrräder Bezug genommen, was jedoch nicht einschränkend in dem Sinne verstanden werden soll, dass der Lastenträger nur für Fahrräder geeignet ist.

Ein derartiger Lastenträger eignet sich insbesondere für Fahrzeuge mit einer Heckklappe, z. B. Kombis, Mini-Vans, Vans, SUVs, Caravans, Geländefahrzeuge etc. Bei derartigen Fahrzeugen ist die Gefahr, dass der Lastenträger ungewollt auf dem Boden aufsetzt, wegen der bestehenden Bodenfreiheit gering. Wie nachstehend noch näher erläutert werden wird, kann eine entsprechende Ausgestaltung des Lastenträgers auch bei einem niedrigeren Karosserieboden sicherstellen, dass der Lastenträger nicht auf diese Weise Schaden nimmt.

In einer zweiten Ausführungsform ist ein trapezförmiges längliches Element, zum Beispiel genau ein trapezförmiges längliches Element, vorgesehen. Diese Form ist geometrisch einfach und lässt beispielsweise sich durch Verwendung von Tiefziehteilen aus Blech oder Kunststoff oder von glasfaserverstärkten Materialien realisieren.

In einer dritten Ausführungsform ist als längliches Element mindestens eine Schiene und sind zum Beispiel genau zwei Schienen vorgesehen. Die Schienen stellen eine robuste und einfache Konstruktion dar, die mit dem Karosserieboden verbunden ist, z.B. verschweißt oder verschraubt ist, und durch die sich die Vertikalposition des Lastenträgers in einem gewissen Maße einstellen lässt, sodass der Lastenträger in der Ebene des Stoßfängers angeordnet ist. Gleichzeitig lässt sich auf bekannte Konzepte für die Bereitstellung einer Schwenkachse zurückgreifen.

In einer weiteren Ausführungsform ist als längliches Element mindestens ein konisch zulaufendes Rohr und sind zum Beispiel genau zwei konische Rohre vorgesehen. Hier gelten die Ausführungen des letzten Absatzes sinngemäß.

Das Herausziehen bzw. Hineinführen des Lastenträgers kann rollengeführt erfolgen wie bei der BE 1012537 A6. Alternativ kann das mindestens eine längliche Element teleskopierbar sein wie bei der DE 102 52 132 A1, wobei der Platzbedarf geringer ausfällt als bei einem länglichen Element auf Rollen. Diese zwei Möglichkeiten, die auch kombiniert werden können, bestehen bei allen vorgenannten Bauformen des länglichen Elements.

Wie oben ausgeführt, dient die Schwenkachse dazu, das Transportgut bei beladenem Lastenträger vom Fahrzeugheck wegzuschwenken, um so den Kofferraums zugänglich zu machen. Es versteht sich hierbei von selbst, dass die Schwenkachse schräg zur Fahrzeuglängsrichtung verläuft. Die Heckklappe ist dann am ehesten bei geladenem Lastenträger zu öffnen, wenn die Schwenkachse in Fahrzeugquerrichtung verläuft. Besitzt hierbei der Lastenträger mindestens zwei längliche Elemente, z. B. zwei Schienen, so verfügen diese über eine gemeinsame Schwenkachse, die dann z. B. in Fahrzeugquerrichtung verläuft.

In einer weiteren Ausführungsform umfasst das längliche Element ein Grundelement, das, wenn vollständig aus dem Fahrzeugheck herausgezogen eine erste Gebrauchsposition des länglichen Elements definiert. Weiterhin umfasst der Lastenträger eine mit dem Grundelement verbundene Verlängerung, mit der eine zweite Gebrauchsposition definiert ist.

Das Grundelement kann z. B. mindestens eine Schiene (oder ein konisches Rohr) sein, die, wenn aus dem Fahrzeugheck herausgezogen, eine erste Gebrauchsposition definiert. Die erste Gebrauchsposition kann dadurch charakterisiert sein, dass bei ihr zwei Fahrräder mit dem Lastenträger transportierbar sind. Wird hingegen die Verlängerung benutzt; z. B. dadurch, dass sie dank ihrer Teleskopierbarkeit aus dem Grundelement herausgezogen wird, so wird der Lastenträger in Fahrzeuglängsrichtung länger. Damit ergibt sich die zweite Gebrauchsposition, bei der sich z. B. mit dem Lastenträger vier Fahrräder transportieren lassen. Über die Schwenkachse lassen sich dann in der ersten Gebrauchsposition zwei Fahrräder und in der zweiten Gebrauchsposition vier Fahrräder von der Heckklappe wegschwenken, wodurch sich in beiden Fällen die Heckklappe öffnen lässt und der Kofferraum jeweils zugänglich ist.

Dadurch, dass das längliche Element bei dieser Ausführungsform aus zwei Komponenten (Grundelement und Verlängerung) besteht, passt sich die Länge des Lastenträgers auf die Abmessungen der tatsächlich zu transportierenden Lasten an. Hierbei ist es möglich, die Verlängerung demontierbar am Grundelement zu befestigen und insofern als separates Teil vorzuhalten. Die Verlängerung muss insofern von Kunden, die dieses Teil nicht benötigen, nicht mit dem Fahrzeug mitgekauft werden, sondern kann später bei tatsächlichem Bedarf noch zugekauft werden. Alternativ sind Grundelement und Verlängerung fest verbunden.

Aus den obigen Ausführungen ergibt sich, dass die Schwenkachse Teil der Verlängerung und/oder des Grundelements ist.

Beispielsweise befindet die Schwenkachse zum rückwärtigen Ende der Verlängerung hin. In diesem Fall ist die Schwenkachse ebenfalls längsverschiebbar. Dies erlaubt es, bei der Auslegung des Lastenträgers die Schwenkachse in den Bereich des Schwerpunkts der zu transportierenden Last zu legen, wodurch ein Wegkippen mit geringem Kraftaufwand möglich ist. Es ist hierbei auch möglich, dass sowohl bei zwei als auch bei vier auf dem Lastenträger befindlichen Fahrrädern der Schwerpunkt oberhalb der Schwenkachse liegt und damit ein Wegkippen der Last leicht fällt. Insgesamt bietet damit eine Ausführungsform, bei der die Schwenkachse Teil der Verlängerung ist, die Möglichkeit, einen Lastenträger bereitzustellen, dessen Last besonders einfach gekippt werden kann, wodurch seine Handhabbarkeit gesteigert wird.

Ferner wird eine Ausführungsform vorgeschlagen, bei der ein Sensor vorgesehen ist, mit dem feststellbar ist, ob die Last, z. B. zwei oder vier Fahrräder, weggeschwenkt ist.

Das Wegschwenken bzw. Wegkippen dient dazu, die Heckklappe des Fahrzeugs zu öffnen, um sich Zugang zum Kofferraum zu verschaffen. In der sich damit ergebenden gekippten Stellung des Lastenträgers ist im Regelfall eine Weiterfahrt aus Sicherheitsgründen nicht zulässig. Mit dem Sensor, z. B. einen mechanischen, optischen oder magnetischen Sensor, kann festgestellt werden, ob insofern eine Weiterfahrt erlaubt ist oder nicht. Bei gekipptem Lastenträger kann die Elektronik des Fahrzeugs eine Weiterfahrt gänzlich verhindern oder die Geschwindigkeit drosseln, im Regelfall ergänzt mit einem optischen und gegebenenfalls einem akustischen Warnsignal.

Die Anbindung der Verlängerung an das Grundelement kann unterschiedlich gewählt werden.

Eine Möglichkeit besteht darin, dass die Verlängerung am Grundelement angelenkt ist. Ist beispielsweise das Grundelement eine Schiene und die Verlängerung ebenso, so können diese parallel zueinander ausgerichtet werden und über ein Abstandselement relativ zueinander positioniert werden. Hierzu ist das Abstandselement sowohl am Grundelement als auch an der Verlängerung gelenkig befestigt. Ohne ein Wegkippen der Last sind damit zwei Transportebenen definiert, z. B. eine erste, niedrigere Transportebene für den Transport von zwei Fahrrädern und eine zweite, weiter oben angeordnete Transportebene für den Transport von zwei weiteren Fahrrädern. Wegen der zweiten Transportebene ergibt sich einen stets ausreichenden Rampenwinkel für den hinteren Lastenträgerbereich, sodass eine sichere Fahrt möglich ist.

Eine zweite Möglichkeit besteht darin, dass eine ausklappbare Verlängerung vorgesehen ist. In diesem Fall ist das Grundelement mit der besagten Schwenkachse ausgestattet und wird die Verlängerung über einen Klappmechanismus aktiviert. Die Verlängerung lässt sich in diesem Fall auch anteilig für die Befestigung der Lasten nutzen.

In einer weiteren Ausführungsform besitzt der Lastenträger ein längliches Element aus drei ineinander teleskopierbaren Schienen, wobei die innerste Schiene eine drehbar gelagerte Umgreifschiene besitzt.

Durch diese Ausgestaltung ergibt sich eine äußerst kompakte Konstruktion des länglichen Elements mit der Möglichkeit, zwei Fahrräder zu transportieren. Das Wegkippen erfolgt hierbei mithilfe der Umgreifschiene.

Die letztgenannte Ausführungsform kann dahingehend ergänzt werden, dass in die innerste Schiene ein treppenförmiges Erweiterungsteil einsteckbar ist.

Durch das Erweiterungsteil, das in der innersten Schiene verrastet sein kann, besteht die Möglichkeit, zwei weitere Fahrräder zu transportieren und bei Bedarf wegzukippen. Die zwei länglichen Elemente definieren hierbei eine erste Transportebene und das Erweiterungsteil eine zweite, höher gelegene Transportebene. Durch die zweite Transportebene hat man mehr Bodenfreiheit im hinteren Lastenträgerbereich mit einer geringeren Gefahr, dass dieser ungewollt auf der Fahrbahn aufsetzt.

Die Drehachse des Erweiterungsteils kann sich bei dieser Konstruktion beim Transport von vier gleichen Fahrrädern in etwa unterhalb des Schwerpunkts befinden. Insofern lässt sich die Gesamtheit von vier Fahrrädern mit nur geringem Kraftaufwand von der Heckklappe wegschwenken.

Ferner ist eine Ausführungsform vorgesehen, bei der der Tragrahmen eine Querstrebe umfasst, an der ein drehbarer Fahrradhalter befestigt ist. Der Fahrradhalter, der zum Beispiel ausgebildet sein kann, eine Pedalstange eines Fahrrads zu fixieren, kann durch die drehbare Ausführung Platz sparend verstaut werden, wenn der Lastenträger in das Fahrzeugheck eingefahren wird. Bei Benutzung kann er in Fahrzeuglängsrichtung ausgerichtet sein und Pedalstangen aufnehmen. Bei Nichtbenutzung kann er in eine Stellung parallel zur Querstange schwenken und benötigt so beim Verstauen des Lastenträgers im Fahrzeugheck kaum Platz.

In einem zweiten Aspekt betrifft die Erfindung ein Kraftfahrzeug, insbesondere einen Pkw, mit einem Lastenträger nach einem der vorherigen Ausführungsformen. Der Pkw kann hierbei eine nach oben schwenkbare Heckklappe besitzen, wie es unter anderem bei Vans, Mini-Vans, Caravans, Geländefahrzeugen oder Kombis der Fall ist.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1a bis Fig. 1c: eine erste Ausführungsform eines länglichen Elements des Lastenträgers,
- Fig. 2: eine zweite Ausführungsform eines länglichen Elements des Lastenträgers,
- Fig. 3a und Fig. 3b: eine dritte Ausführungsform eines länglichen Elements des Lastenträgers,
- Fig. 4: ein Lastenträger nach dem Stand der Technik,
- Fig. 5a und Fig. 5b: eine vierte Ausführungsform eines länglichen Elements des Lastenträgers,
- Fig. 6: eine Verlängerung für ein längliches Element des Lastenträgers,
- Fig. 7: die Verlängerung der Fig. 6 bei der Montage,
- Fig. 8a bis Fig. 8f: eine fünfte Ausführungsform eines länglichen Elements des Lastenträgers,
- Fig. 9a bis Fig. 9e: eine sechste Ausführungsform eines länglichen Elements des Lastenträgers,
- Fig. 10: einen drehbaren Fahrradhalter an einer Querstange des Lastenträgers,
- Fig. 11: eine Detailansicht des Schwenkachsenbereichs mit der Pedalstange eines Fahrrads, die mit dem Fahrradhalter der Fig. 10 fixiert ist,
- Fig. 12: ein Fahrzeug mit montiertem Lastenträger, auf dem 4 von der Heckklappe weggekippte Fahrräder befestigt sind.

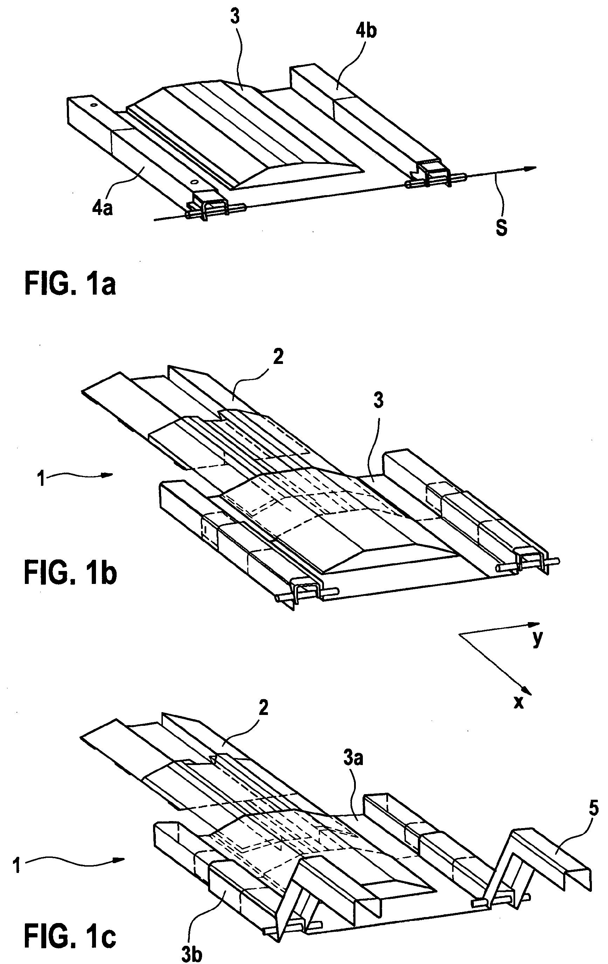

Bei den Figuren, die allgemein mit gleichen Bezugszeichen gleiche Gegenstände bezeichnen, zeigen die Figuren 1a bis 1c eine erste Ausführungsform eines länglichen Elements 1 für einen Lastenträger. Es besitzt ein trapezförmiges Grundelement 2, das mit dem Karosserieboden des Fahrzeugs (nicht gezeigt) verbunden ist und das über seinen mittigen Bereich eine Verlängerung 3 herausführen kann.

Das längliche Element 1 ist in Fahrzeuglängsrichtung teleskopierbar ausgeführt. Die x-Achse des eingezeichneten kartesischen Koordinatensystems verläuft parallel hierzu in Richtung der Fahrzeugrückseite und die y-Achse verläuft in Fahrzeugquerrichtung von der linken zur rechten Fahrzeugseite.

Am länglichen Element 1 ist ferner ein Tragrahmen befestigt, der der Aufnahme des Transportguts dient. Da bei dieser Erfindung der Tragrahmen nicht im Vordergrund steht, wird auf dessen bauliche Ausgestaltung nicht weiter eingegangen. Es kann zum Beispiel ein Tragrahmen gewählt werden, wie er in der DE 102 52 132 A1 oder der DE 102 31 963 A1 beschrieben ist.

Die Verlängerung 3 besitzt beidseitig Schienen 4a, 4b, in die man ein als Steckprofil ausgebildetes Erweiterungsteil 5 einführen kann. Die Verlängerung 3 besteht aus zwei Teilen 3a und 3b, von denen sich das Teil 3b um die Schwenkachse S drehen lässt, nicht aber das Teil 3a. Damit lässt sich das Erweiterungsteil 5 gemeinsam mit dem Teil 3b der Verlängerung 3 um die parallel zur y-Achse ausgerichtete Schwenkachse S drehen.

Bei der Ausführungsform der Fig. 1a bis 1c lassen sich z. B. zwei Fahrräder oberhalb des Teils 3b platzieren und zwei weitere Fahrräder oberhalb des Erweiterungsteils 5. Die Fahrräder sind dann auf zwei Transportebenen angeordnet, bei der die erste Transportebene durch die Schienen 4a und 4b definiert ist und die zweite Transportebene durch den oberen horizontalen Abschnitt des treppenförmigen Erweiterungsteils 5. Durch die zweite, höher gelegene Transportebene wird vermieden, dass der hintere Bereich des Lastenträgers bei Bergauffahrt ungewollt auf der Fahrbahn aufsetzt.

Der Schwerpunkt der zu transportierenden Fahrräder befindet sich bei dieser Ausführungsform oberhalb der Schwenkachse S. Das Wegkippen von der in (-x) -Richtung befindlichen Heckklappe des Fahrzeugs ist somit mit minimalem Kraftaufwand möglich.

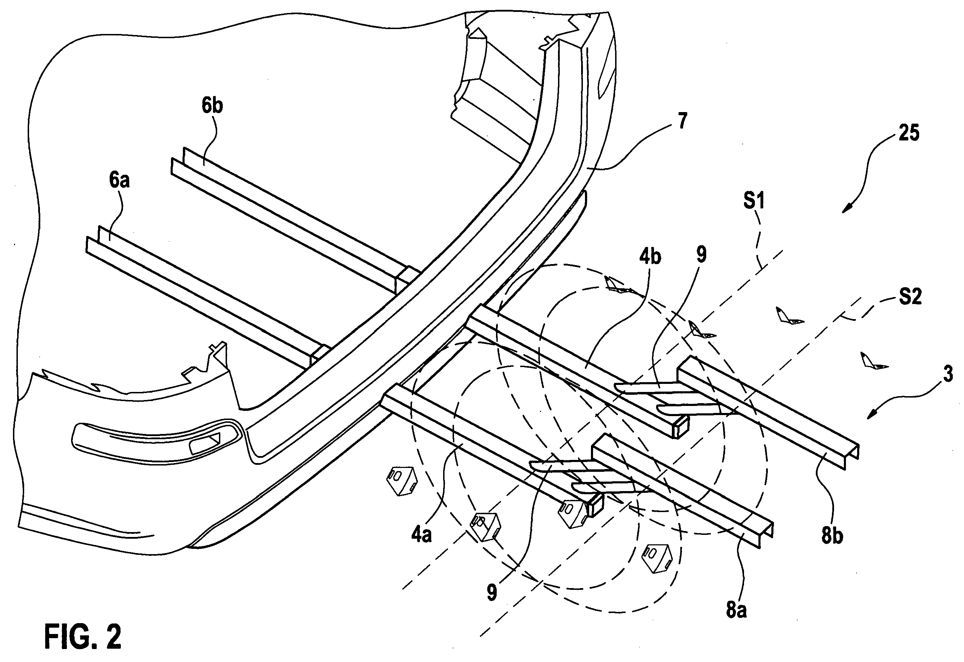

Fig. 2 zeigt eine zweite Ausführungsform eines länglichen Elements 1 des Lastenträgers 25. Es handelt sich hierbei um zwei Schienen 4a und 4b, die teleskopierbar in die Längsträger 6a bzw. 6b des Fahrzeugs geführt sind, wobei die Führung durch den Stoßfänger 7 hindurch erfolgt. Die Verlängerung 3 besteht aus zwei Schienen 8a und 8b, die jeweils über ein Abstandselement 9 gelenkig an die Schienen 4a bzw. 4b angebunden sind. Das Abstandselement 9 ist dabei unter anderem relativ zu den Schienen 4a und 4b um die Achse S1 schwenkbar. Relativ zu den Schienen 8a und 8b ist es unter anderem um die Achse S2 schwenkbar.

Die Figur zeigt die Verlängerung 3 in ihrer Gebrauchsposition, in der sich zwei Fahrräder oberhalb des durch die Schienen 4a und 4b definierten Grundelements 1 und zwei Fahrräder oberhalb der durch die Schienen 8a und 8b definierten Verlängerung 3 transportieren lassen. Wird der Lastenträger nicht benutzt, so wird die Verlängerung 3 auf das Grundelement 1 geschwenkt, liegt dort bündig auf, und wird die damit entstandene Einheit durch den Stoßfänger 7 in das Fahrzeugheck hineingeführt.

Eine andere Möglichkeit der Gestaltung des in Figur 2 gezeigten 4-Gelenks 4a, 4b, 8a, 8b, 9 besteht darin, dass es zunächst wie oben beschrieben in die in Figur 2 gezeigte Stellung gebracht wird, und dann die Schienen 4a, 4b in das Fahrzeugheck hinein geschoben werden. In diesem Fall kann die Verlängerung 8a, 8b zum Transport zweier Fahrräder genutzt werden.

Die Ausführungsform der Fig. 2 stellt eine Platz sparende Möglichkeit für die Lagerung der Verlängerung 3 für den Fall dar, dass der Lastenträger nicht benötigt wird und in das Fahrzeugheck hineingeführt ist. Bezüglich der Lagerung des Transportguts, z. B. zwei oder vier Fahrräder, auf zwei Transportebenen gilt das mit Bezug auf die Figuren 1a - 1c Ausgesagte.

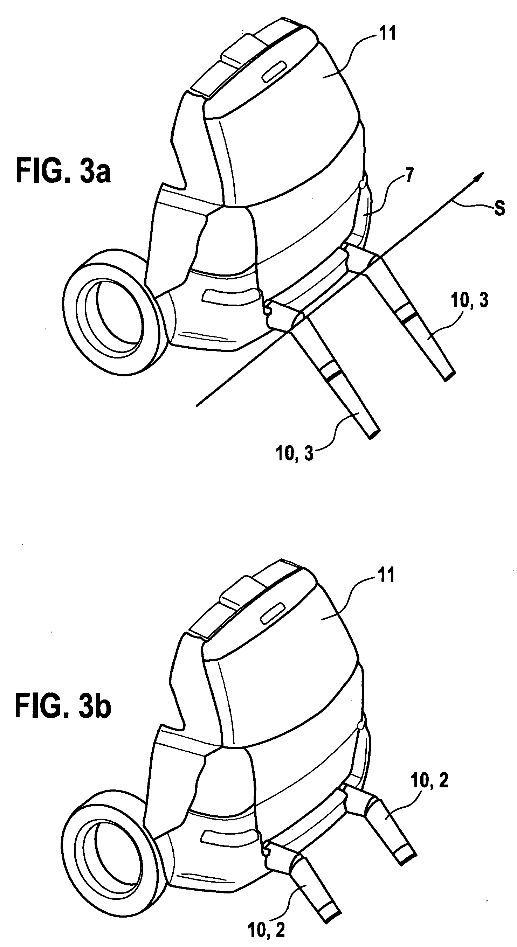

Die Figuren 3a und 3b zeigen eine weitere Ausführungsform des länglichen Elements 1, bei dem die weiteren Teile des Lastenträgers 25 wie bereits bei den Figuren 1a - 1c sowie Figur 2 der Übersichtlichkeit halber nicht gezeigt sind. Anstelle zweier Schienen sind bei dieser Ausführungsform zwei konische Rohre 10 in den Stoßfänger 7 des Kraftfahrzeugs 11 geführt. Die konischen Rohre 10 sind um die Schwenkachse S drehbar und teleskopisch ausgeführt. Ein Vergleich der Figuren 3a und 3b ergibt, dass die konischen Rohre 10 ein Grundelement 2 sowie eine Verlängerung 3 besitzen, wobei die Verlängerung 3 teleskopisch im Grundelement 2 gelagert ist.

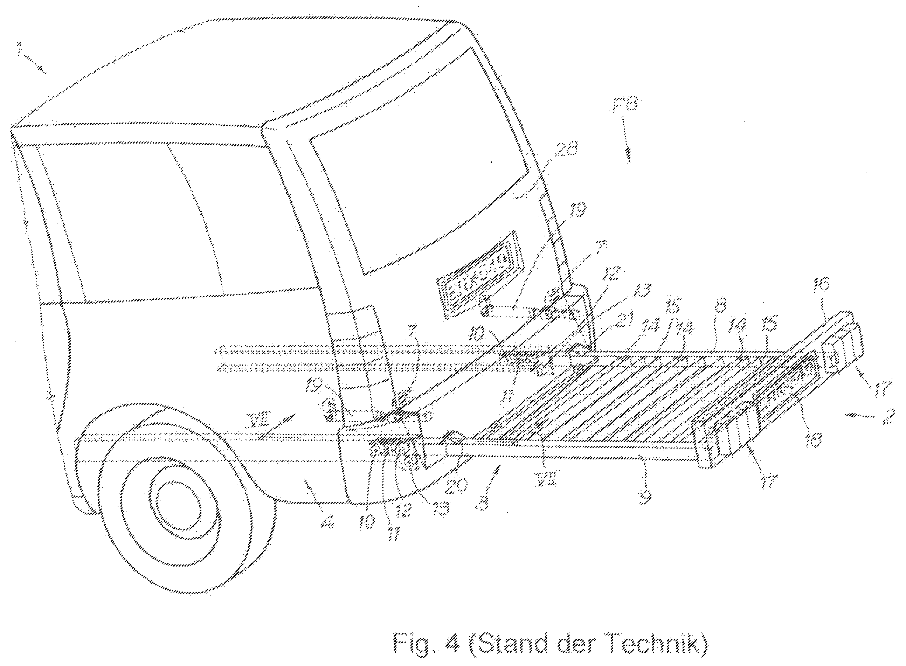

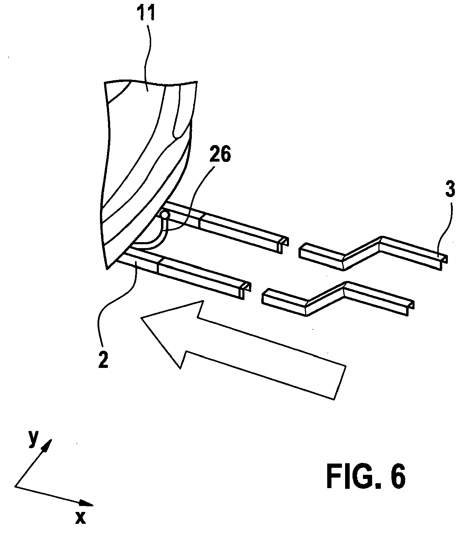

Figur 4 zeigt den Stand der Technik und ist konkret die Figur 6 der BE 1012537 A6. Der Lastenträger (dortiges Bezugszeichen 2) ist hierbei auf Rollen (dortige Bezugszeichen 10, 11, 12) in das Fahrzeug geführt. Eine derartige Rollenführung kann auch die vorliegende Erfindung für die Lagerung des länglichen Elements 1 genutzt werden.

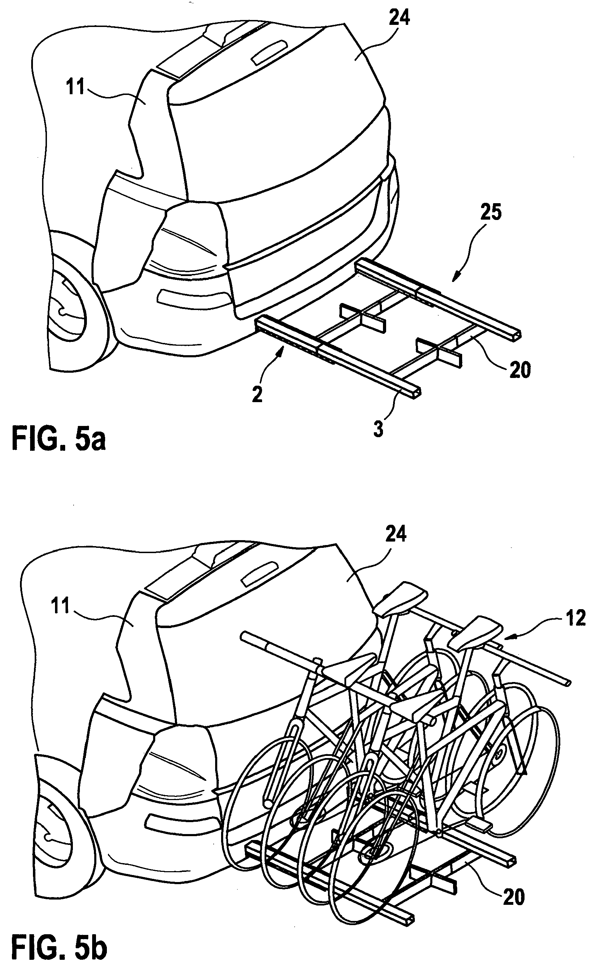

Die Figuren 5a und 5b zeigen eine weitere Ausführungsform eines länglichen Elements 1 des Lastenträgers. Das längliche Element 1 besitzt hierbei ein u-förmiges Grundelement 2 mit einer hierin teleskopisch gelagerten u-förmigen Verlängerung 3. Bei Figur 5b ist insbesondere ersichtlich, dass das längliche Element 1 genutzt werden kann, um insgesamt vier Fahrräder 12 zu transportieren.

Figur 6 zeigt eine Ausführungsform, bei der die Verlängerung 3 als treppenförmiges Steckprofil ausgebildet ist, das sich auch nachträglich zukaufen lässt und in Pfeilrichtung in das Grundelement 2 einführen lässt. Die Verlängerung 3 ist somit demontierbar befestigt, sodass der Lastenträger bei einer Nutzung der Anhängerkupplung 26 nicht im Weg ist.

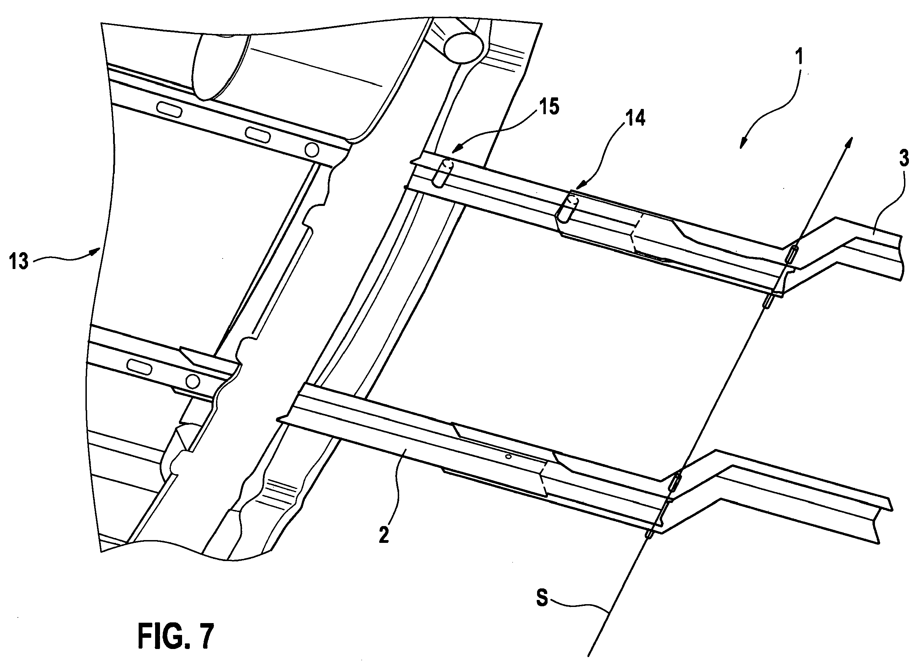

Figur 7 zeigt die Ausführungsform der Figur 6 schräg von unten, d. h. mit Blick schräg auf die Unterseite des Karosseriebodens 13. Am fahrzeugseitigen Ende der Verlängerung 3 befindet sich ein Element 14, das vom Sensor 15 im Grundelement 2 detektiert wird, wenn die Verlängerung 3 hinreichend dicht benachbart ist. Dies ist nur dann der Fall, wenn die Verlängerung 3 nicht um die Schwenkachse S geschwenkt ist. Bei der Detektion des Elements 14 durch den Sensor 15 ist somit eine Fahrt mit dem Fahrzeug erlaubt. Wird das Element 14 nicht detektiert, so ist eine Fahrt wegen der weggeschwenkten Verlängerung 3 nicht erlaubt und wird ein entsprechendes Signal an die Bordelektronik des Fahrzeugs weitergegeben. Entsprechend kann ein optisches oder akustisches Warnsignal ausgegeben werden und gegebenenfalls die Fahrt sogar ganz verhindert werden.

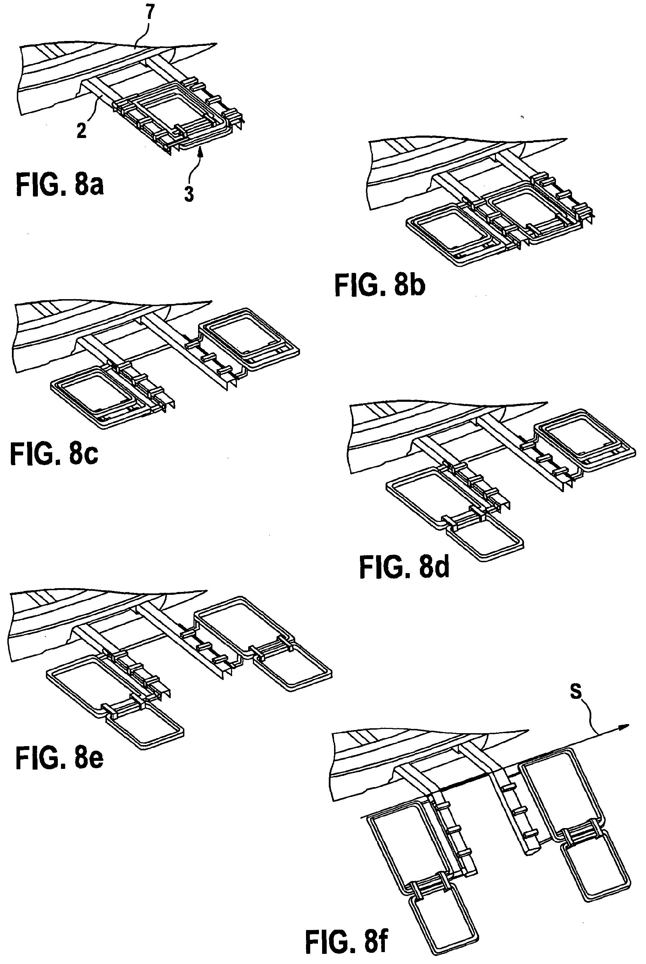

Die Figuren 8a - 8f zeigen den Fall eines Grundelements 1 mit einer ausklappbaren Verlängerung 3. Diese wird mit dem Grundelement 2 aus den Stoßfänger 7 herausgeführt, vergleiche Fig. 8a. Die weiteren Figuren 8b bis 8f zeigen, wie die ausklappbare Verlängerung 3 zeitlich nacheinander ausgeklappt wird.

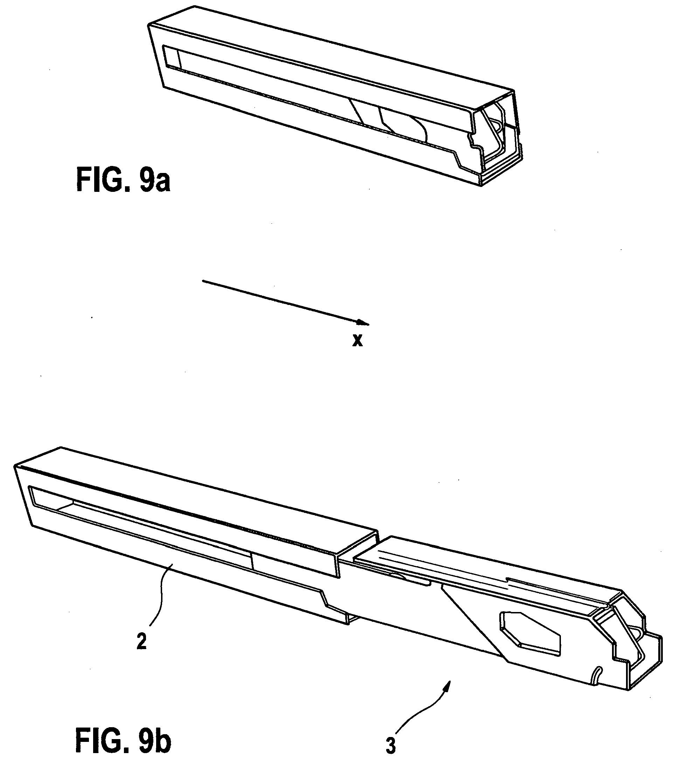

Die Figuren 9a bis 9e zeigen ein längliches Element 1 in der Ausgestaltung dreier teleskopisch ineinander angeordneter Schienen. Die Figur 9a zeigt dabei den äußerst Platz sparenden Zustand beim Herausführen des Lastenträgers aus dem Fahrzeugheck.

Bei Figur 9b ist die Verlängerung 3 in x-Richtung herausgeschoben. Diese Stellung ist der Transportzustand des Lastenträgers für den Fall, dass zwei Fahrräder transportiert werden.

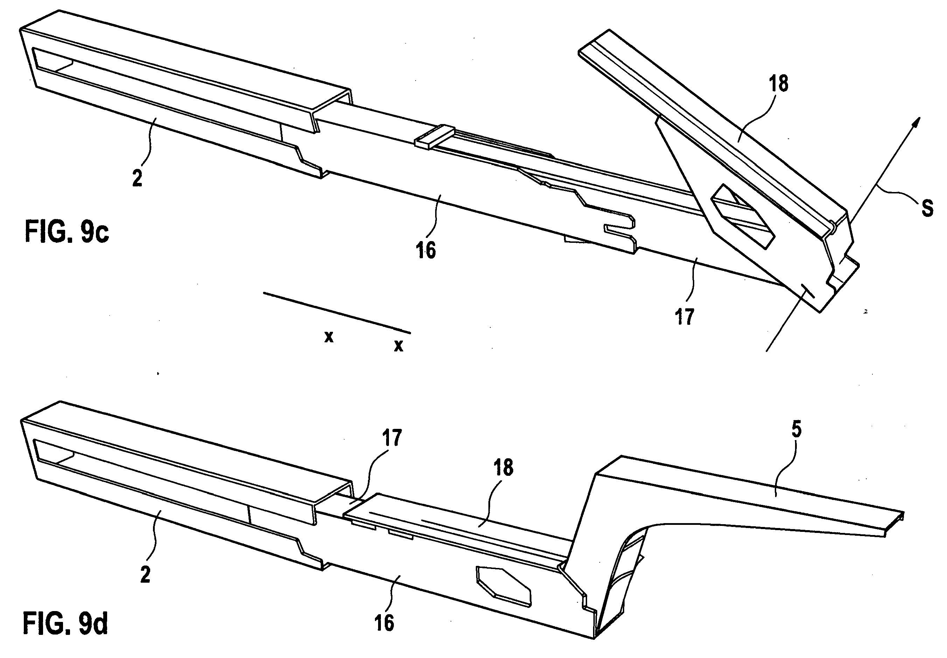

Figur 9c entspricht Figur 9b mit dem Unterschied, dass die Umgreifschiene 18 im Uhrzeigersinn um die Achse S geschwenkt ist. Damit ergibt sich diejenige Stellung, bei der die zwei Fahrräder von der Heckklappe weggeschwenkt sind und der Kofferraum zugänglich ist. Man erkennt dabei, dass die Verlängerung 3 aus einer äußeren Schiene 16 und einer inneren Schiene 17 besteht, dass also das längliche Element 1 aus drei ineinander hineingeschobenen Schienen besteht.

Figur 9d entspricht Figur 9b mit dem Unterschied, dass in die Verlängerung 3 ein Erweiterungsteil 5 eingesteckt ist. Das Erweiterungsteil 5 definiert mit seinem oberen, horizontal verlaufenden Bereich eine zweite Transportebene, mit der zwei zusätzliche und damit insgesamt vier Fahrräder transportierbar sind. Figur 9d zeigt dabei den Transportzustand des Lastenträgers.

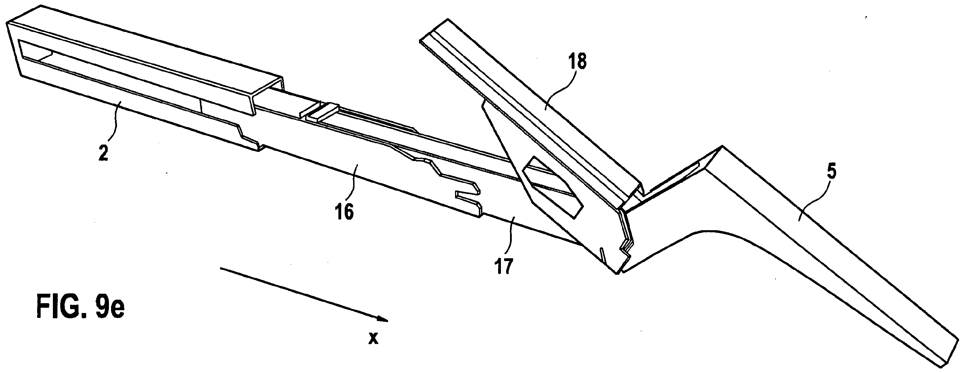

Schwenkt man bei Figur 9d die Umgreifschiene 18 zusammen mit der Umgreifschiene 18 um die Achse S im Uhrzeigersinn, so gelangt man zum Zustand der Figur 9e. Diese zeigt den Zustand des länglichen Elements 1 bei insgesamt vier gekippten Fahrrädern.

Der Fachmann wird erkennen, dass bei dem in den Figuren 9a - 9e gezeigten länglichen Element 1 ggf. auch auf die innerste Schiene 17 verzichtet werden kann. Die Schiene 17 dient dazu, das längliche Element 1 in x-Richtung zu verlängern, sodass die Last (z.B. vier Fahrräder) außerhalb der Hüllkurve 23 der Heckklappe 24 bleibt. Die Hüllkurve 23 ist allerdings je nach Fahrzeugtyp verschieden und hängt u.a. von der Lage der Heckklappenschwenkachse in x-Richtung ab. Ist die Heckklappenschwenkachse vom Fahrzeugheck weiter entfernt, so muss das längliche Element 1 nicht so lang sein und es kann ggf. auf die innerste Schiene 17 verzichtet werden. Ähnliches gilt, wenn bei diesem kombinierten Kipp-/Schiebemechanismus die Last um einen größeren Winkel von der Heckklappe 24 weggekippt wird.

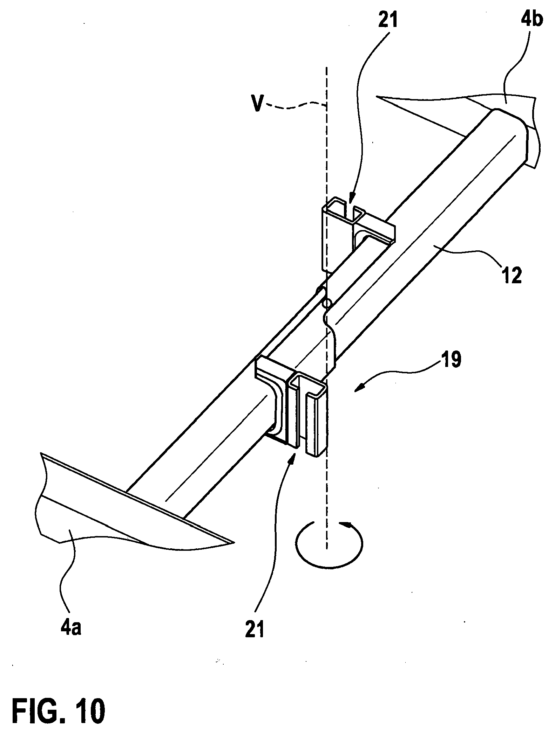

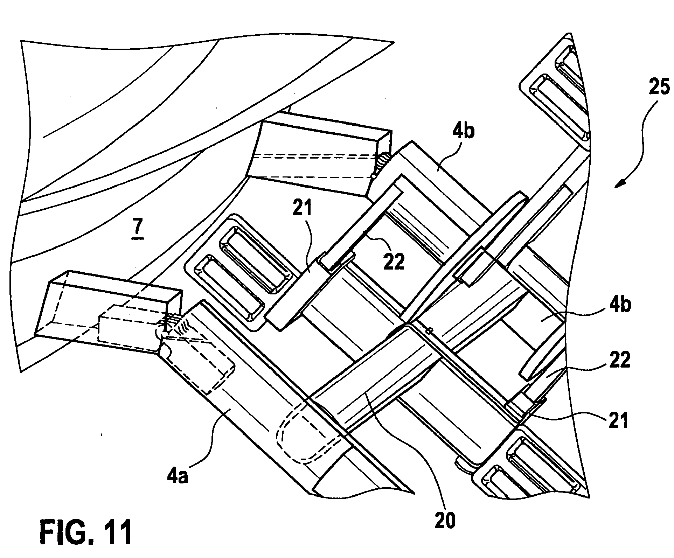

Figur 10 zeigt ferner einen drehbaren Fahrradhalter 19 an einer Querstange 20 des Lastenträgers. Der Fahrradhalter 19 ist drehbar um die Vertikalachse V gelagert und besitzt an seinen beiden Enden eine schienenförmige Aufnahme 21, in die eine Pedalstange 22 eines Fahrrads 12 aufgenommen wird, vgl. Figur 11, um es am Lastenträger 25 zu fixieren.

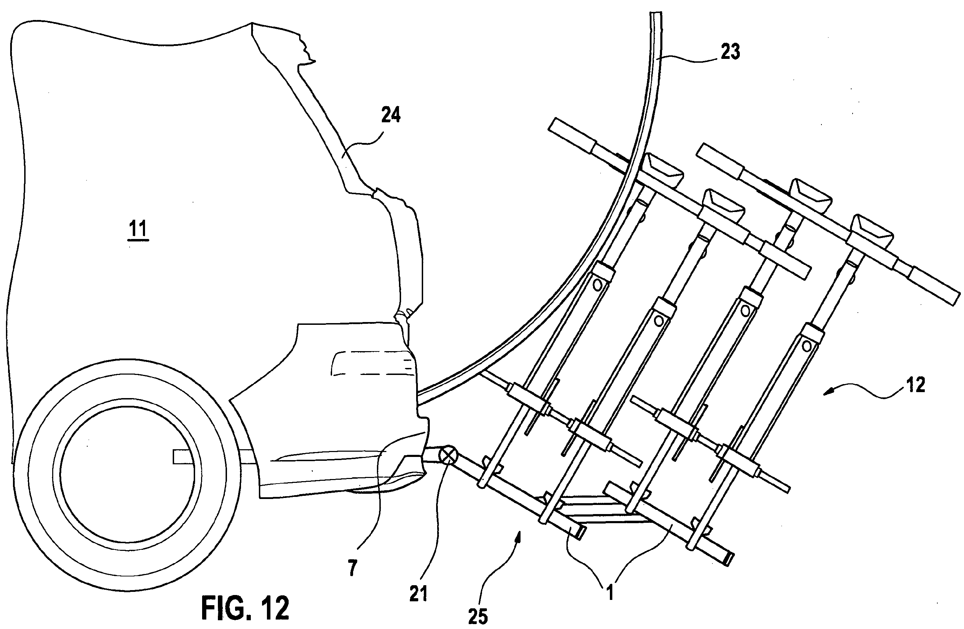

Figur 12 zeigt einen Lastenträger 25 mit dem länglichen Element 1 der Figur 2 montiert am Kraftfahrzeug 11. Die vier Fahrräder 12 sind von der Heckklappe 24 weggeschwenkt und befinden sich außerhalb von deren Hüllkurve 23 (Der Lenker des äußerst linken Fahrrads befindet sich vor dem Schwenkbereich der Heckklappe 24). Der Kofferraum ist damit auch im beladenen Zustand des Lastenträgers 25 zugänglich.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken.

Die Erfindung wird durch die Ansprüche definiert.

### Bezugszeichenliste

- 01: längliches Element
- 02: Grundelement
- 03: Verlängerung
- 3a: Teil
- 3b: Teil
- 4a: Schiene
- 4b: Schiene
- 05: Erweiterungsteil
- 6a: Längsträger
- 6b: Längsträger
- 07: Stoßfänger
- 8a: Schiene
- 8b: Schiene
- 09: Abstandselement
- 10: Rohr
- 11: Kraftfahrzeug
- 12: Fahrrad
- 13: Karosserieboden
- 14: Element
- 15: Sensor
- 16: äußere Schiene
- 17: innere Schiene
- 18: Umgreifschiene
- 19: Fahrradhalter
- 20: Querstange
- 21: Aufnahme
- 22: Pedalstange
- 23: Hüllkurve
- 24: Heckklappe
- 25: Lastenträger
- 26: Anhängerkupplung

- S: Schwenkachse
- S1: Schwenkachse
- S2: Schwenkachse
- V: Achse

## Patentansprüche

1. Lastenträger (25) zum Ausziehen aus einem Fahrzeugheck, bei dem ein Tragrahmen an mindestens einem mit einer Schwenkachse (S) ausgestatteten und längsverschiebbaren länglichen Element (1) durch den Stoßfänger (7) eines Kraftfahrzeugs (11) oder unter dem Stoßfänger des Kraftfahrzeugs geführt ist, wobei bei beladenem Lastenträger (25) das Transportgut (12) mittels der Schwenkachse (S) von dem Fahrzeugheck wegverschwenkbar ist, **dadurch gekennzeichnet, dass** das längliche Element (1) ein Grundelement (2) und eine mit dem Grundelement (2) verbundene Verlängerung (3) umfasst, wobei das Grundelement (2) eine erste Gebrauchsposition definiert, wenn es aus dem Fahrzeugheck herausgezogen ist, mit der Verlängerung (3) eine zweite Gebrauchsposition definiert ist und das Grundelement (2) in der ersten Gebrauchsposition eine erste Transportebene bildet und die Verlängerung (3) in der zweiten Gebrauchsposition eine zweite Transportebene bildet, welche gegenüber der ersten Transportebene höher liegt.

2. Lastenträger nach Anspruch 1, **dadurch gekennzeichnet, dass** ein trapezförmiges längliches Element (1) vorgesehen ist.

3. Lastenträger nach Anspruch 1 oder 2, **dadurch gekennzeichnet, dass** als längliches Element eine Schiene (4a, 4b, 8a, 8b) vorgesehen ist.

4. Lastenträger nach einem der vorherigen Ansprüche, **dadurch gekennzeichnet, dass** als längliches Element ein konisch zulaufendes Rohr (10) vorgesehen ist.

5. Lastenträger nach einem der vorherigen Ansprüche, **dadurch gekennzeichnet, dass** das längliche Element rollengelagert ist.

6. Lastenträger nach einem der vorherigen Ansprüche, **dadurch gekennzeichnet, dass** das längliche Element teleskopierbar ist.

7. Lastenträger nach einem der vorherigen Ansprüche, **dadurch gekennzeichnet, dass** die Schwenkachse in Fahrzeugquerrichtung verläuft.

8. Lastenträger nach einem der vorherigen Ansprüche, **dadurch gekennzeichnet, dass** mindestens zwei längliche Elemente vorgesehen sind, die über eine gemeinsame Schwenkachse (S) verfügen.

9. Lastenträger nach einem der vorherigen Ansprüche, **dadurch gekennzeichnet, dass** die Verlängerung (3) demontierbar am Grundelement (2) befestigt ist.

10. Lastenträger nach einem der vorherigen Ansprüche, **dadurch gekennzeichnet**, das die Schwenkachse (S) Bestandteil des Grundelements (2) und/oder der Verlängerung (3) ist.

11. Lastenträger nach einem der vorhergehenden Ansprüche, **dadurch gekennzeichnet, dass** ein Sensor (15) vorgesehen ist, mit dem feststellbar ist, ob die Last weggeschwenkt ist.

12. Lastenträger nach einem der vorherigen Ansprüche, **dadurch gekennzeichnet, dass** die Verlängerung (3) am Grundelement (2) angelenkt ist.

13. Lastenträger nach einem der vorherigen Ansprüche, **dadurch gekennzeichnet, dass** eine ausklappbare Verlängerung vorgesehen ist.

14. Lastenträger nach einem der vorherigen Ansprüche, **dadurch gekennzeichnet, dass** das längliche Element drei ineinander teleskopierbare Schienen (2, 16, 17) sind, wobei die innerste Schiene eine drehbar gelagerte Umgreifschiene (18) besitzt.

15. Lastenträger nach Anspruch 14, **dadurch gekennzeichnet, dass** in die innerste Schiene (17) ein treppenförmiges Steckprofil einsteckbar ist.

16. Lastenträger nach einem der vorherigen Ansprüche, **dadurch gekennzeichnet, dass** der Tragrahmen eine Querstrebe (20) umfasst, an der ein drehbarer Fahrradhalter (20) befestigt ist.

17. Lastenträger nach Anspruch 16, **dadurch gekennzeichnet, dass** der Fahrradhalter (20) ausgebildet ist, eine Pedalstange (22) eines Fahrrads (12) zu fixieren.

18. Pkw, insbesondere ein mit einer Heckklappe (24) ausgestatteter Pkw, umfassend einen Lastenträger (25) nach einem der vorherigen Ansprüche.

## Claims

1. A load carrier (25) for extending from a vehicle rear, wherein a carrying frame is guided on at least one elongated element (1), which is equipped with a pivot axis (S) and is longitudinally displaceable, through the bumper (7) of a motor vehicle (11) or beneath the bumper of a motor vehicle, wherein, when the load carrier (25) is loaded, the transport item (12) can be pivoted away from the vehicle rear by means of the pivot axis (S), **characterized in that** the elongated element (1) comprises a base element (2) and an extension (3) connected to the base element (2), wherein the base element (2) defines a first in-use position when it is pulled out of the vehicle rear, and a second in-use position is defined with the extension (3), and the base element (2) forms a first transport plane in the first in-use position and the extension (3) forms a second transport plane in the second in-use position, which second transport plane is situated at a higher altitude in relation to the first transport plane.

2. A load carrier according to claim 1, **characterized in that** a trapezoidal elongated element (1) is provided.

3. A load carrier according to claim 1 or 2, **characterized in that** a rail (4a, 4b, 8a, 8b) is provided as an elongated element.

4. A load carrier according to one of the preceding claims, **characterized in that** a conically tapering tube (10) is provided as an elongated element.

5. A load carrier according to one of the preceding claims, **characterized in that** the elongated element is mounted on roller bearings.

6. A load carrier according to one of the preceding claims, **characterized in that** the elongated element is telescopic.

7. A load carrier according to one of the preceding claims, **characterized in that** the pivot axis extends in the transverse direction of the vehicle.

8. A load carrier according to one of the preceding claims, **characterized in that** at least two elongated elements are provided which have a common pivot axis (S).

9. A load carrier according to one of the preceding claims, **characterized in that** the extension (3) is dismountably fixed to the base element (2).

10. A load carrier according to one of the preceding claims, **characterized in that** the pivot axis (S) is a component of the base element (2) and/or the extension (3).

11. A load carrier according to one of the preceding claims, **characterized in that** a sensor (15) is provided with which it can be determined whether the load has been pivoted away.

12. A load carrier according to one of the preceding claims, **characterized in that** the extension (3) is linked to the base element (2).

13. A load carrier according to one of the preceding claims, **characterized in that** a foldable extension is provided.

14. A load carrier according to one of the preceding claims, **characterized in that** the elongated element is three rails (2, 16, 17) which can be telescoped into each other, wherein the innermost rail comprises a rotatably mounted reach-round rail (18).

15. A load carrier according to claim 14, **characterized in that** the innermost rail (17) can be inserted into a stepped insert profile.

16. A load carrier according to one of the preceding claims, **characterized in that** the support frame comprises a crossmember (20) on which a rotatable bicycle holder (20) is fastened.

17. A load carrier according to claim 16, **characterized in that** the bicycle holder (20) is formed to fix a pedal rod (22) of a bicycle (12).

18. A passenger car, especially a passenger car equipped with a tailgate (24), comprising a load carrier (25) according to one of the preceding claims.

## Revendications

1. Porte-charge (25) destiné à être extrait de l'arrière d'un véhicule, dans lequel un cadre portant est guidé sur au moins un élément allongé (1) équipé d'un axe de pivotement (S) et capable de translation longitudinale est guidé à travers le pare-chocs (7) d'un véhicule à moteur (11) ou sous le pare-chocs du véhicule à moteur, la sangle de transport (12) pouvant être écartée de l'arrière du véhicule au moyen de l'axe de pivotement (S) quand le porte-charge (25) est chargé, **caractérisé en ce que** l'élément allongé (1) comprend un élément de base (2) et une rallonge (3) reliée à l'élément de base (2), l'élément de base (2) définissant une première position d'utilisation quand il est tiré hors de l'arrière du véhicule, une deuxième position d'utilisation étant définie avec la rallonge (3) et l'élément de base (2) dans la première position d'utilisation formant un premier plan de transport et la rallonge (3) dans la deuxième position d'utilisation formant un deuxième plan de transport qui se trouve plus haut que le premier plan de transport.

2. Porte-charge selon la revendication 1, **caractérisé en ce qu'**il est prévu un élément allongé (1) trapézoïdal.

3. Porte-charge selon la revendication 1 ou 2, **caractérisé en ce qu'**un rail (4a, 4b, 8a, 8b) est prévu comme élément allongé.

4. Porte-charge selon l'une des revendications précédentes, **caractérisé en ce qu'**un tube de forme conique (10) est prévu comme élément allongé.

5. Porte-charge selon l'une des revendications précédentes, **caractérisé en ce que** l'élément allongé est supporté sur des galets.

6. Porte-charge selon l'une des revendications précédentes, **caractérisé en ce que** l'élément allongé est télescopique.

7. Porte-charge selon l'une des revendications précédentes, **caractérisé en ce que** l'axe de pivotement est orienté dans le sens transversal du véhicule.

8. Porte-charge selon l'une des revendications précédentes, **caractérisé en ce qu'**il est prévu au moins deux éléments allongés qui disposent d'un axe de pivotement (S) commun.

9. Porte-charge selon l'une des revendications précédentes, **caractérisé en ce que** la rallonge (3) est fixée de façon démontable sur l'élément de base (2).

10. Porte-charge selon l'une des revendications précédentes, **caractérisé en ce que** l'axe de pivotement (S) fait partie de l'élément de base (2) et/ou de la rallonge (3).

11. Porte-charge selon l'une des revendications précédentes, **caractérisé en ce qu'**il est prévu un capteur (15) permettant de déterminer si la charge est déportée.

12. Porte-charge selon l'une des revendications précédentes, **caractérisé en ce que** la rallonge (3) est articulée sur l'élément de base (2).

13. Porte-charge selon l'une des revendications précédentes, **caractérisé en ce qu'**il est prévu une rallonge rabattable.

14. Porte-charge selon l'une des revendications précédentes, **caractérisé en ce que** l'élément allongé est formé de trois rails (2, 16, 17) télescopiques les uns dans les autres, dont le plus intérieur possède un rail enveloppant (18) supporté avec possibilité de rotation.

15. Porte-charge selon la revendication 14, **caractérisé en ce qu'**un profilé emboîtable en forme de marche d'escalier peut être inséré dans le rail le plus intérieur (17).

16. Porte-charge selon l'une des revendications précédentes, **caractérisé en ce que** le cadre portant comprend une traverse (20) sur laquelle un porte-vélos pivotant (20) est fixé.

17. Porte-charge selon la revendication 16, **caractérisé en ce que** le porte-vélos (20) est conçu pour fixer une pédale (22) d'un vélo (12).

18. Voiture, en particulier voiture équipée d'un hayon (24), comprenant un porte-charge (25) selon l'une des revendications précédentes.
